# EUROPEAN PATENT APPLICATION

(11) **EP 4 715 919 A1**
(43) Date of publication of application: **25.03.2026**
(21) Application number: 25198965.3
(22) Date of filing: 29.08.2025
(51) Int. Cl.: H01M 10/04, H01M 10/0587, H01M 50/107, H01M 50/184, H01M 50/538

(54) **SECONDARY BATTERY, BATTERY GROUP AND ELECTRONIC APPARATUS**

(30) Priority: 20.09.2024 CN 202422300254 U
(71) Applicant: AESC Japan Ltd., Yokohama-shi, Kanagawa 220-0012 (JP)
(72) Inventor: ZHANG, Wenjing, Jiangyin City, Wuxi City 214443 (CN)
(74) Representative: Becker, Eberhard

(57) **Abstract**

A secondary battery (1), a battery group (100), and an electronic apparatus (1000) are provided. The secondary battery (1) includes a casing (10) and an electrode assembly (20) accommodated in the casing (10) and including a wound structure (201) formed by stacking and winding a positive sheet (21), a separator (22), and a negative sheet (23). In a wound structure axial direction (O), a positive current collector (211) of the positive sheet (21) includes a positive coated region (212) and a positive uncoated region (213), and a negative current collector (231) of the negative sheet (23) includes a negative coated region (232) and a negative uncoated region (233). In a wound structure winding direction (P), the positive uncoated region (213) sequentially includes a first, a second, and a third positive uncoated regions (214, 215, 216), and the negative uncoated region (233) sequentially includes negative uncoated regions (234, 235, 236).

## Description

### BACKGROUND

### Technical Field

The disclosure relates to a secondary battery, a battery group, and an electronic apparatus.

### Description of Related Art

With the development of social economy, more and more electronic apparatuses, such as new energy vehicles, communication base stations, energy storage containers, etc., use secondary batteries as energy storage and supply devices.

Generally, a secondary battery includes an electrode assembly and a casing, and the electrode assembly includes a positive electrode, a negative electrode, and a separator. The positive tab and negative tab of the electrode assembly of the secondary battery are welded to the corresponding current-collecting plates first. During mounting, the current-collecting plates are pressed and the tabs are then welded to the current-collecting plates, so the positive and negative tabs are generally made of different materials. Since the hardness of the positive tab and the hardness of the negative tab are different, the pressing during mounting may cause the positive tab and negative tab to expand outward in the radial direction of the secondary battery by different distances, so the space inside the battery casing is occupied, and the energy density of the secondary battery is thus affected.

### SUMMARY

The technical problem to be solved by the disclosure is to overcome the above technical problems in the related art and provide a secondary battery, a battery group, and an electronic apparatus.

The disclosure solves the above technical problems through the following technical solutions.

A secondary battery includes a casing and an electrode assembly. The electrode assembly is accommodated in the casing and includes a wound structure formed by stacking and winding a positive sheet, a separator, and a negative sheet. The positive sheet includes a positive current collector, and the negative sheet includes a negative current collector. In a wound structure axial direction, the positive current collector includes a positive coated region covered by a positive active material layer and a positive uncoated region not covered by the positive active material layer, and the negative current collector includes a negative coated region covered by a negative active material layer and a negative uncoated region not covered by the negative active material layer. A direction from the positive coated region to the positive uncoated region is a first direction, and a direction from the negative coated region to the negative uncoated region is a second direction. In a wound structure winding direction, the positive uncoated region sequentially includes a first positive uncoated region, a second positive uncoated region, and a third positive uncoated region, and the negative uncoated region sequentially includes a first negative uncoated region, a second negative uncoated region, and a third negative uncoated region. In the first direction, the second positive uncoated region includes a positive tab and a positive connection region connected between the positive tab and the positive coated region, and neither the first positive uncoated region nor the third positive uncoated region includes the positive tab. In the second direction, the second negative uncoated region includes a negative tab and a negative connection region connected between the negative tab and the negative coated region, and neither the first negative uncoated region nor the third negative uncoated region includes the negative tab. The number of winding turns of the third positive uncoated region is greater than the number of winding turns of the third negative uncoated region.

Preferably, a value range of the number of winding turns of the third positive uncoated region is 3 to 6. Alternatively, a value range of the number of winding turns of the third negative uncoated region is 1 to 3.

Preferably, in the wound structure axial direction, among winding turns of the second positive uncoated region, the second positive uncoated region located at the outermost turn includes a first bent portion, and an orthogonal projection of the first bent portion is located within an outer periphery of the wound structure. Alternatively, in the wound structure axial direction, among winding turns of the second negative uncoated region, the second negative uncoated region located at the outermost turn includes a second bent portion, and an orthogonal projection of the second bent portion is located within the outer periphery of the wound structure.

Preferably, in the wound structure winding direction, a first positive uncoated region length is 400 mm to 600mm, a second positive uncoated region length is 3000 mm to 5000mm, and a third positive uncoated region length is 200 mm to 500mm. Alternatively, in the wound structure winding direction, a first negative uncoated region length is 300 mm to 500mm, a second negative uncoated region length is 3000 mm to 5000mm, and a third negative uncoated region length is 100 mm to 300mm. Alternatively, a ratio of the third positive uncoated region length to the third negative uncoated region length is 1.5 to 2.5.

Preferably, the positive connection region includes a first side away from a center hole of the wound structure and a second side close to the center hole in a wound structure radial direction. At least a partial region of the first side and/or the second side is covered with an insulating layer, and the insulating layer includes a color developer.

Preferably, the insulating layer covers an entire region of the first side of the positive connection region. The insulating layer covers an entire region of the second side of the positive connection region. Further or alternatively, in the first direction, a maximum width of the insulating layer is greater than or equal to a positive connection region width.

Preferably, in the first direction, a positive connection region width is 1.5mm to 2.5mm. Further or alternatively, in the second direction, a negative connection region width is 1mm to 2mm.

Preferably, in the first direction, the positive tab includes a positive tab transition portion and a positive tab body. The positive tab transition portion is connected between the positive connection region and the positive tab body and is a bent region of the positive tab. In the second direction, the negative tab includes a negative tab transition portion and a negative tab body. The negative tab transition portion is connected between the negative connection region and the negative tab body and is a bent region of the negative tab. A positive tab transition portion width of the positive tab located at an outermost turn is greater than a positive tab transition portion width of the negative tab located at an outermost turn.

Preferably, in the first direction, the positive tab transition portion width is 1mm to 2mm, a positive tab body width is 4.5mm to 5.5mm, and a positive tab thickness is 12µm to 20µm. Further or alternatively, in the second direction, a negative tab transition portion width is 0.1mm to 1mm, a negative tab body width is 4mm to 5mm, and a negative tab thickness is 4µm to 11µm.

Preferably, the casing includes a surrounding side wall. One end of the side wall is formed with an opening, and one end of the casing close to the opening includes a crimping portion recessed toward an inner portion of the casing. The secondary battery further includes a cover plate, an insulating sealing member, and a current-collecting plate. The cover plate is mounted at the opening. The insulating sealing member is arranged around a periphery of the cover plate, so that the cover plate and the casing are insulated and sealed. The current-collecting plate is arranged between the electrode assembly and the cover plate and is electrically connected to the casing. A connection piece of the current-collecting plate is located on a side of the crimping portion facing the electrode assembly and is welded and connected to the crimping portion. Further or alternatively, the secondary battery is a cylindrical battery, the positive tab is a cut and stacked tab, and the negative tab is a cut and stacked tab.

A battery group includes the secondary battery according to the above.

An electronic apparatus includes the battery group according to the above.

The positive progress effects provided by the disclosure include the following.

In the disclosure, by setting the number of winding turns of the third positive uncoated region to be greater than the number of winding turns of the third negative uncoated region, outward expansion in the wound structure radial direction after the second positive uncoated region is bent and after the second negative uncoated region is bent is as consistent as possible, so that the impact on the energy density of the secondary battery is lowered. Meanwhile, the number of winding turns of the third negative uncoated region is reduced as little as possible, and an increase in the internal resistance of the secondary battery is avoided in this way. That is, the energy density of the secondary battery is improved and the internal resistance is reduced.

### BRIEF DESCRIPTION OF THE DRAWINGS

FIG. 1 is a schematic cross-sectional view of a structure of a secondary battery according to a preferred embodiment of the disclosure.
FIG. 2 is a schematic local enlarged view of a portion A in FIG. 1.
FIG. 3 is a schematic three-dimensional view of a structure of an electrode assembly of the secondary battery according to a preferred embodiment of the disclosure.
FIG. 4 is a schematic cross-sectional view of the structure of the electrode assembly of the secondary battery according to a preferred embodiment of the disclosure.
FIG. 5 is a schematic view of a structure of a positive sheet of the secondary battery in an unwound state according to a preferred embodiment of the disclosure.
FIG. 6 is a schematic local cross-sectional view (I) of the structure of the electrode assembly of the secondary battery according to a preferred embodiment of the disclosure.
FIG. 7 is a schematic view of a structure of a negative sheet of the secondary battery in an unwound state according to a preferred embodiment of the disclosure.
FIG. 8 is a schematic local cross-sectional view (II) of the structure of the electrode assembly of the secondary battery according to a preferred embodiment of the disclosure.
FIG. 9 is a schematic local cross-sectional view (III) of the structure of the electrode assembly of the secondary battery according to a preferred embodiment of the disclosure.
FIG. 10 is a schematic local enlarged view of a portion B in FIG. 9.
FIG. 11 is a schematic local enlarged view of a portion C in FIG. 9.
FIG. 12 is a schematic local cross-sectional view (I) of a structure of a single-turn positive sheet of the secondary battery according to a preferred embodiment of the disclosure.
FIG. 13 is a schematic local cross-sectional view (II) of the structure of the single-turn positive sheet of the secondary battery according to a preferred embodiment of the disclosure.
FIG. 14 is a schematic local cross-sectional view (I) of a structure of a single-turn negative sheet of the secondary battery according to a preferred embodiment of the disclosure.
FIG. 15 is a schematic local cross-sectional view (II) of the structure of the single-turn negative sheet of the secondary battery according to a preferred embodiment of the disclosure.
FIG. 16 is a schematic view of a structure of a battery group according to a preferred embodiment of the disclosure.
FIG. 17 is a schematic view of a structure of an electronic apparatus according to a preferred embodiment of the disclosure.

Description of Reference Numerals:
electronic apparatus 1000, battery group 100, working portion 300, box 310, box cover 320, secondary battery 1, casing 10, side wall 11, opening 12, end wall 13, electrode assembly 20, wound structure 201, center hole 2011, positive sheet 21, positive current collector 211, positive active material layer 2111, positive coated region 212, positive uncoated region 213, first positive uncoated region 214, second positive uncoated region 215, positive tab 2151, positive tab transition portion 21511, positive tab body 21512, positive connection region 2152, third positive uncoated region 216, positive sheet starting position 217, positive sheet ending position 218, separator 22, separator starting position 221, separator ending position 222, negative sheet 23, negative current collector 231, negative active material layer 2311, negative coated region 232, negative uncoated region 233, first negative uncoated region 234, second negative uncoated region 235, negative tab 2351, negative tab transition portion 21511, negative tab body 23512, negative connection region 2352, third negative uncoated region 236, negative sheet starting position 237, negative sheet ending position 238, insulating layer 24, insulating film 25, crimping portion 30, cover plate 40, insulating sealing member 50, first current-collecting plate 61, second current-collecting plate 62, electrode post 70, first positive uncoated region length a1, second positive uncoated region length a2, third positive uncoated region length a3, first negative uncoated region length b1, second negative uncoated region length b2, third negative uncoated region length b3, positive tab transition portion width c1, positive tab body width c2, positive connection region width c3, negative connection region width d1, negative tab width d2, negative connection region width d3, positive tab thickness t1, negative tab thickness t2, wound structure axial direction O, wound structure radial direction R, wound structure winding direction P, first direction Q1, second direction Q2, positive current collector width direction W1, and negative current collector width direction W2.

### DESCRIPTION OF THE EMBODIMENTS

The following is a preferred embodiment and a more clear and complete description of the disclosure together with the accompanying drawings.

In the related art, the positive tab may have a radial outward extension along the electrode assembly that is greater than the radial outward extension of the negative tab along the electrode assembly, and the energy density of the secondary battery is thus affected. However, in order to avoid increasing the outer diameter of the electrode assembly, the number of turns of the tabs of the electrodes located at the outer turns of the electrode assembly is correspondingly reduced. As a result, the electron path in the outer turn becomes longer and the internal resistance of the battery is larger.

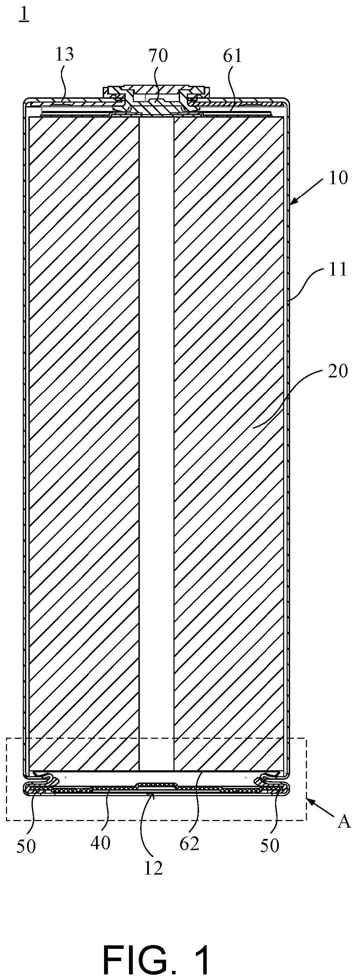

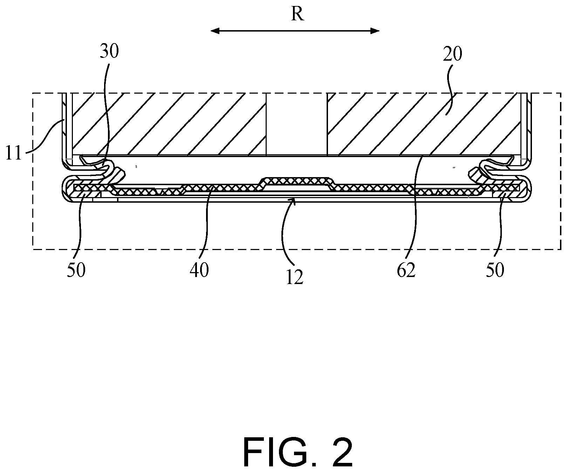

As shown in FIG. 1 and FIG. 2, this embodiment provides a secondary battery 1. The secondary battery 1 includes a casing 10 and an electrode assembly 20 accommodated in the casing 10.

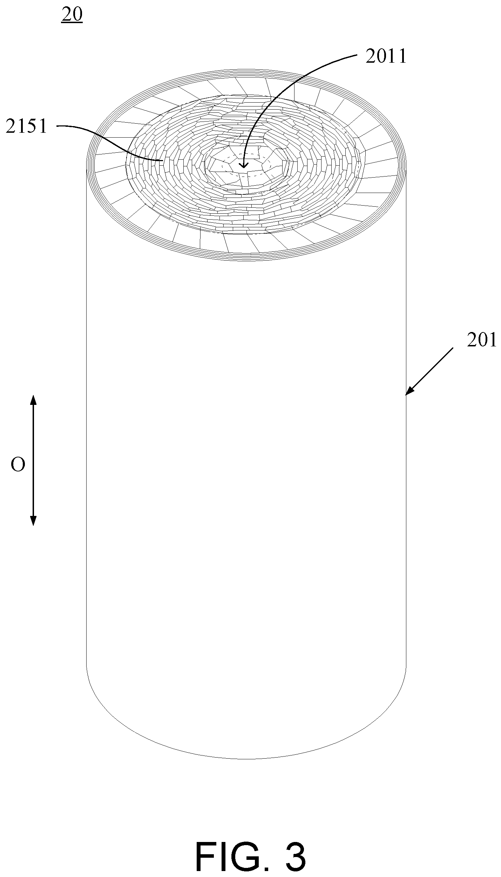

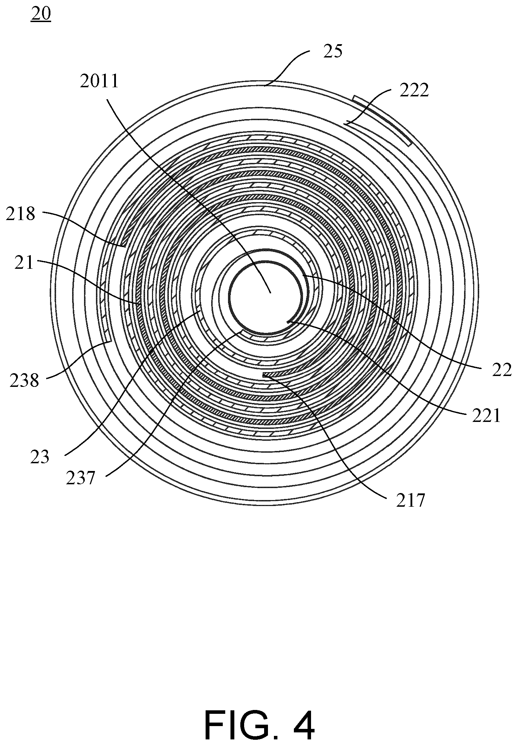

As shown in FIG. 3 and FIG. 4, the electrode assembly 20 includes a wound structure 201 formed by stacking and winding a positive sheet 21, a separator 22, and a negative sheet 23.

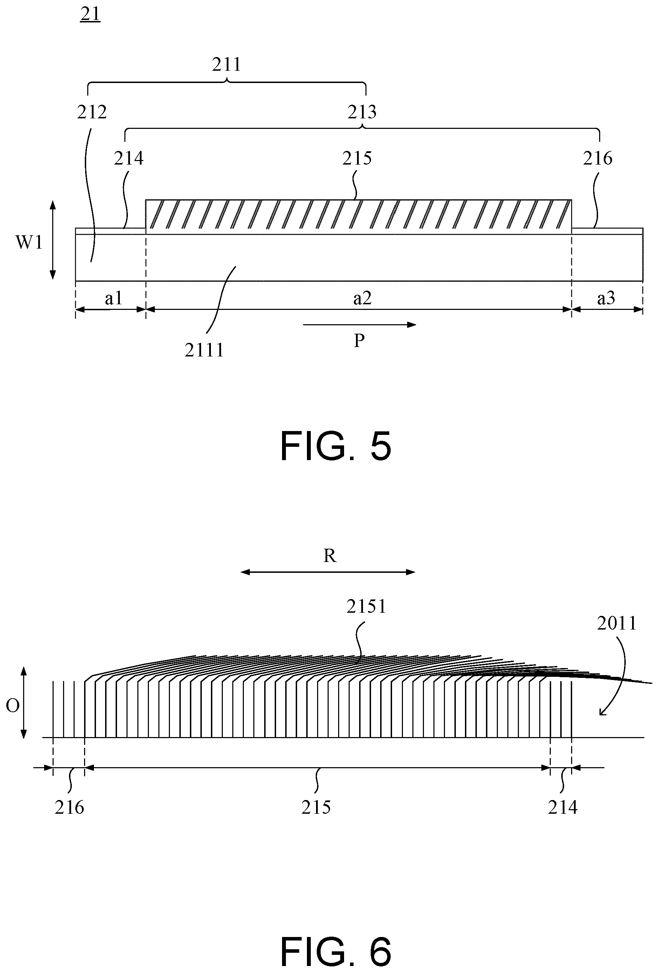

As shown in FIG. 5 and FIG. 6, the positive sheet 21 includes a positive current collector 211. In a wound structure axial direction O, the positive current collector 211 includes a positive coated region 212 covered by a positive active material layer 2111 and a positive uncoated region 213 not covered by the positive active material layer 2111. In a wound structure winding direction P, the positive uncoated region 213 sequentially includes a first positive uncoated region 214, a second positive uncoated region 215, and a third positive uncoated region 216.

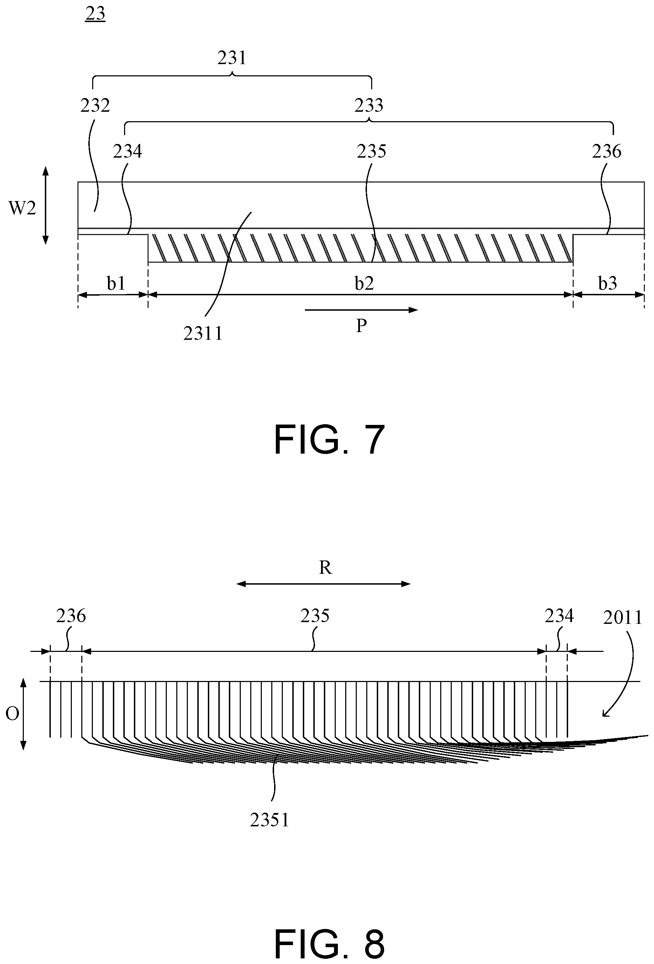

As shown in FIG. 7 and FIG. 8, the negative sheet 23 includes a negative current collector 231. The negative current collector 231 includes a negative coated region 232 covered by a negative active material layer 2311 and a negative uncoated region 233 not covered by the negative active material layer 2311. In the wound structure winding direction P, the negative uncoated region 233 sequentially includes a first negative uncoated region 234, a second negative uncoated region 235, and a third negative uncoated region 236.

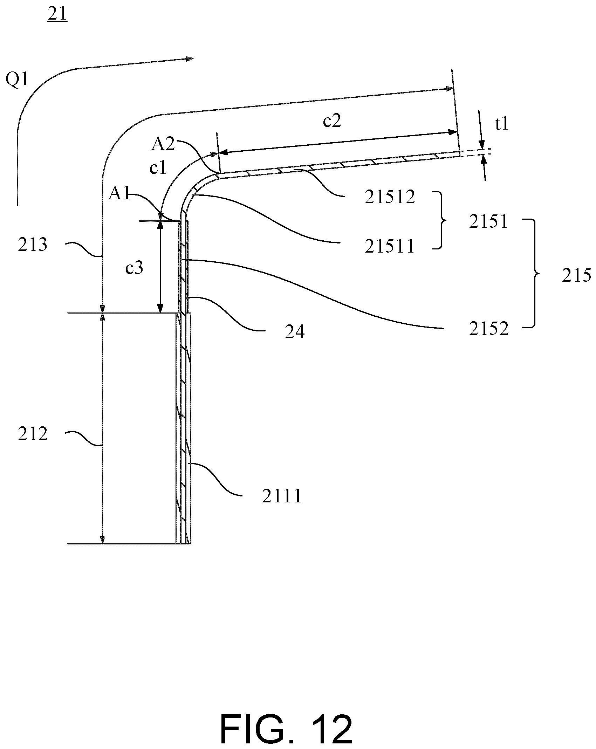

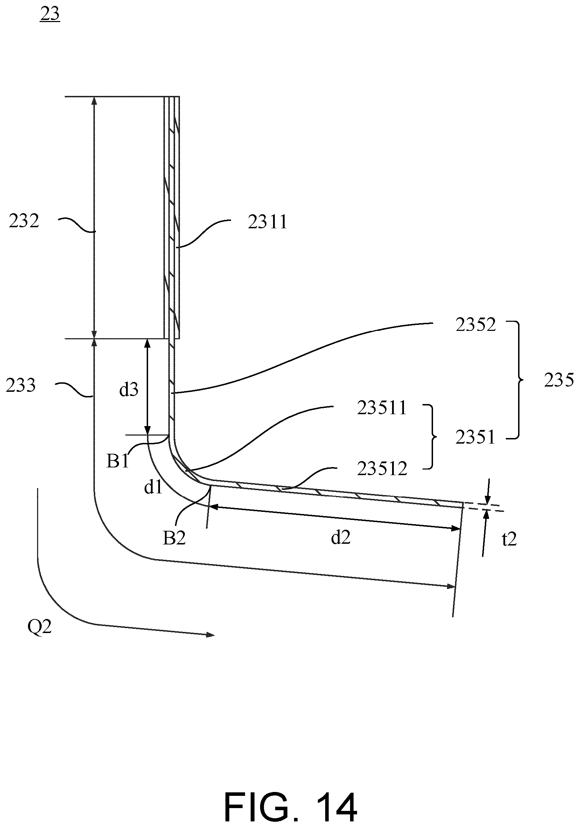

As shown in FIG. 12, a direction from the positive coated region 212 to the positive uncoated region 213 is a first direction Q1. In the first direction Q1, the second positive uncoated region 215 includes a positive tab 2151 and a positive connection region 2152 connected between the positive tab 2151 and the positive coated region 212. Neither the first positive uncoated region 214 nor the third positive uncoated region 216 includes the positive tab. As shown in FIG. 14, a direction from the negative coated region 232 to the negative uncoated region 233 is a second direction Q2. In the second direction Q2, the second negative uncoated region 235 includes a negative tab 2351 and a negative connection region 2352 connected between the negative tab 2351 and the negative coated region 232. Neither the first negative uncoated region 234 and the third negative uncoated region 236 includes the negative tab. Herein, the number of winding turns of the third positive uncoated region 216 is greater than the number of winding turns of the third negative uncoated region 236.

In this way, by setting the number of winding turns of the third positive uncoated region 216 to be greater than the number of winding turns of the third negative uncoated region 236, outward expansion in a wound structure radial direction R after the second positive uncoated region 215 is bent and after the second negative uncoated region 235 is bent may be as consistent as possible, so that the impact on the energy density of the secondary battery 1 is lowered. Meanwhile, the number of winding turns of the third negative uncoated region 236 is reduced as little as possible, and an increase in the internal resistance of the secondary battery 1 is avoided in this way. That is, the energy density of the secondary battery 1 is improved and the internal resistance is reduced.

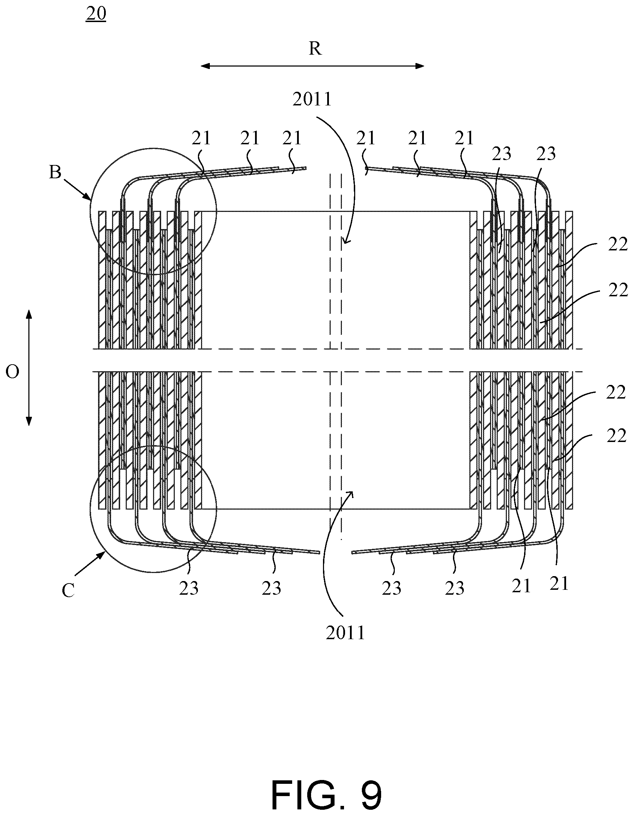

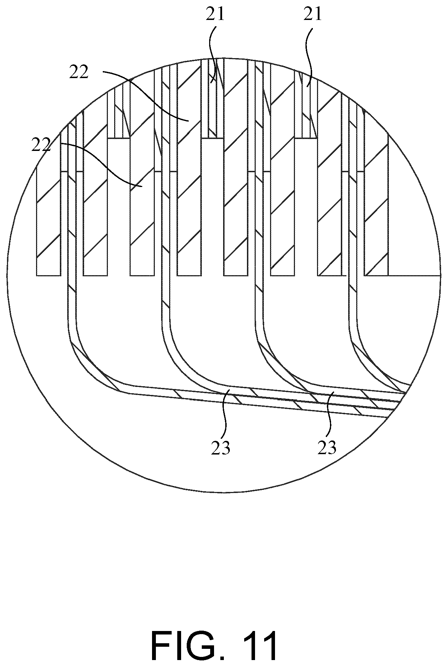

As shown in FIG. 9 to FIG. 11, the wound structure 201 formed by stacking and winding the positive sheet 21, the separator 22, and the negative sheet 23 usually has a center hole 2011 formed in the middle. An axial direction of the center hole 2011 is the wound structure axial direction O, and the wound structure axial direction O is in the same direction as a height direction of the secondary battery 1. The separator 22 is made of an insulating material, specifically may be polypropylene (PP) or polyethylene (PE), etc.

Referring to FIG. 4 again, in the wound structure 201, the positive sheet 21 includes a positive sheet starting position 217 and a positive sheet ending position 218. The negative sheet 23 includes a negative sheet starting position 237 and a negative sheet ending position 238. The separator 22 includes a separator starting position 221 and a separator ending position 222. The wound structure 201 is further covered with an insulating layer 25 on the outside, and the insulating layer 25 may be synthesized from PP, PE, PET, PVC, or other polymer materials.

When the positive sheet 21 is in an unwound state (when the positive sheet 21 is unfolded), that is, in the state before winding, positions of the first positive uncoated region 214, the second positive uncoated region 215, and the third positive uncoated region 216 in the wound structure winding direction P are as shown in FIG. 5. After the wound structure 201 is formed, the positions of the first positive uncoated region 214, the second positive uncoated region 215, and the third positive uncoated region 216 are as shown in FIG. 6. Similarly, when the negative sheet 23 is in an unwound state, positions of the first negative uncoated region 234, the second negative uncoated region 235, and the third negative uncoated region 236 in the wound structure winding direction P are as shown in FIG. 7. After the wound structure 201 is formed, the positions of the first negative uncoated region 234, the second negative uncoated region 235, and the third negative uncoated region 236 are as shown in FIG. 8.

When the positive sheet 21 is unfolded, the positive current collector 211 is in a flat state, and the first direction Q1 is in the same direction as a positive current collector width direction W1. When the positive sheet 21 is wound and the positive tab 2151 is bent, the first direction Q1 changes with the bending of the positive tab 2151. At this point, the first direction Q1 is the direction from the positive connection region 2152 to the positive tab 2151.

Similarly, when the negative sheet 23 is unfolded, the negative current collector 231 is in a flat state, and the second direction Q2 is in the same direction as a negative current collector width direction W2. When the negative sheet 23 is wound and the negative tab 2351 is bent, the second direction Q2 changes with the bending of the negative tab 2351. At this point, the second direction Q2 is the direction from the negative connection region 2352 to the negative tab 2351.

It should be noted that the number of winding turns of the third positive uncoated region 216 refers to the number of turns that the third positive uncoated region 216 overlaps in the wound structure radial direction R after the winding is formed. Similarly, the number of winding turns of the third negative uncoated region 236 refers to the number of turns that the third negative uncoated region 236 overlaps in the wound structure radial direction R after winding is formed. In addition, the casing 10 may include one or a plurality of electrode assemblies 20.

In this embodiment, the casing 10 includes but not limited to one electrode assembly 20. In other embodiments, the number of electrode assemblies 20 included in the casing 10 may also be two, three, four, or other numbers, which may be adjusted according to design needs.

Specifically, a value range of the number of winding turns of the third positive uncoated region 216 is 3 to 6. In this way, by setting the value range of the number of winding turns of the third positive uncoated region 216, on the one hand, it may avoid the number of winding turns of the third positive uncoated region 216 being excessively few, which would cause excessive outward expansion in the wound structure radial direction R after the second positive uncoated region 215 is bent and adversely affect the energy density of the secondary battery 1. On the other hand, it may avoid the number of winding turns of the third positive uncoated region 216 being excessively many, which would cause excessive internal resistance of the battery.

A value range of the number of winding turns of the third negative uncoated region 236 is 1 to 3. In this way, by setting the value range of the number of winding turns of the third negative uncoated region 236, on the one hand, it may avoid the number of winding turns of the third negative uncoated region 236 being excessively few, which would cause excessive outward expansion in the wound structure radial direction R after the second negative uncoated region 235 is bent and adversely affect the energy density of the secondary battery 1. On the other hand, it may avoid the number of winding turns of the third negative uncoated region 236 being excessively many, which would cause excessive internal resistance of the battery.

In the wound structure axial direction O, among winding turns of the second positive uncoated region 215, the second positive uncoated region 215 located at the outermost turn includes a first bent portion. An orthogonal projection of the first bent portion is located within the outer periphery of the wound structure 201, so as to ensure that the outward expansion of the second positive uncoated region 215 after bending in the wound structure radial direction R does not exceed the outer periphery of the wound structure 201, so that the energy density of the secondary battery 1 is prevented from being affected.

In the wound structure axial direction O, among winding turns of the second negative uncoated region 235, the second negative uncoated region 235 located at the outermost turn includes a second bent portion. An orthogonal projection of the second bent portion is located within the outer periphery of the wound structure 201, so as to ensure that the outward expansion of the second negative uncoated region 235 after bending in the wound structure radial direction R does not exceed the outer periphery of the wound structure 201, so that the energy density of the secondary battery 1 is prevented from being affected.

Preferably, referring to FIG. 5 again, in the wound structure winding direction P, a first positive uncoated region length a1 is 400 mm to 600 mm, for example, it may be 400 mm, 450 mm, 500 mm, 520 mm, 580 mm, or 600 mm, etc. A second positive uncoated region length a2 is 3,000 mm to 5,000 mm, for example, it may be 3,000 mm, 3,500 mm, 4,000 mm, 4,200 mm, 4,800 mm, or 5,000 mm, etc. A third positive uncoated region length a3 is 200 mm to 500 mm, for example, it may be 200 mm, 250 mm, 300 mm, 400 mm, 450 mm, or 500 mm, etc.

Referring to FIG. 7 again, in the wound structure winding direction P, a first negative uncoated region length b1 is 300 mm to 500 mm, for example, it may be 300 mm, 350 mm, 400 mm, 420 mm, 480 mm, or 500 mm, etc. A second negative uncoated region length b2 is 3,000 mm to 5,000 mm, for example, it may be 3,000 mm, 3,500 mm, 4,000 mm, 4,200 mm, 4,800 mm, or 5,000 mm, etc. A third negative uncoated region length b3 is 100 mm to 300 mm, for example, it may be 100 mm, 150 mm, 200 mm, 220 mm, 280 mm, or 300 mm, etc.

In this way, by setting the value ranges of the first positive uncoated region length a1, the second positive uncoated region length a2, the third positive uncoated region length a3, the first negative uncoated region length b1, the second negative uncoated region length b2, and the third negative uncoated region length b3, the energy density may be better improved and the internal resistance of the battery may be reduced.

A ratio of the third positive uncoated region length a3 to the third negative uncoated region length b3 is 1.5 to 2.5, for example, it may be 1.5, 1.7, 2, 2.1, 2.3, or 2.5, etc. In this way, by setting the value range of the ratio of the third positive uncoated region length a3 to the third negative uncoated region length b3 to be an appropriate ratio, it may be ensured that not only the number of turns of the third positive uncoated region 216 is greater than the number of turns of the third negative uncoated region 236, but also the lengths of both are within an appropriate range, so that the internal resistance of the battery is within an appropriate range.

The positive connection region 2152 includes a first side away from the center hole 2011 of the wound structure 201 and a second side close to the center hole 2011 in the wound structure radial direction R. At least a partial region of the first side and/or the second side is covered with an insulating layer 24. In this way, by covering at least a partial region of the first side and/or the second side of the positive connection region 2152 with the insulating layer 24, the risk of deformation of the positive connection region 2152 may be reduced and the insulation performance of the positive connection region 2152 may be improved, so that the safety and reliability of battery performance are improved. A main composition of the insulating layer 24 is boehmite and polyvinylidene difluoride (PVDF). A proportion of boehmite is 80%, and a proportion of PVDF is 20%. A thickness of the insulating layer 24 is 1.5 µm to 2.5 µm, for example, it may be 1.5 µm, 1.7 µm, 2 µm, 2.1 µm, 2.3 µm, or 2.5 µm, etc. By setting the thickness range of the insulating layer 24, it is avoided that the coating thickness of the insulating layer 24 is excessively thin, resulting in difficulty in obtaining the required electrical insulation and supporting strength. Meanwhile, it is also avoided that the thickness of the insulating layer 24 is excessively thick, resulting in the possibility of longer curing time of the coating layer and increased thickness of the overall structure. Preferably, the thickness of the insulating layer 24 is 2 µm.

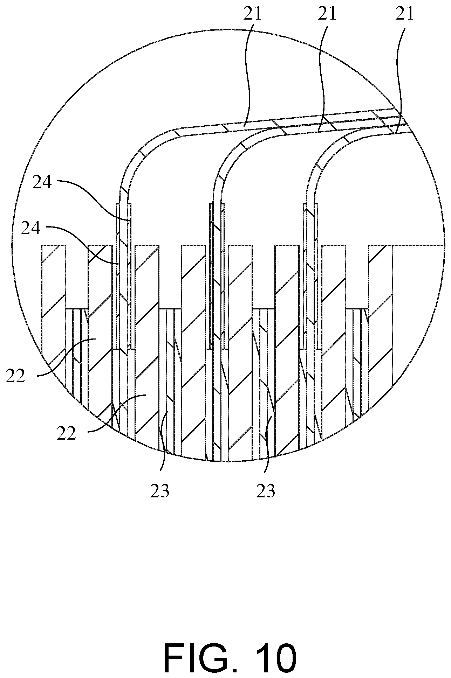

Referring to FIG. 10 and FIG. 12 again, in this embodiment, both the first side and the second side of the positive connection region 2152 are covered with the insulating layer 24. However, it is not limited thereto, and in other embodiments, it may also be that only the first side of the positive connection region 2152 is covered with the insulating layer 24, or only the second side of the positive connection region 2152 is covered with the insulating layer 24. It may be adjusted according to design needs.

The insulating layer 24 includes a color developer, so as to distinguish whether the side coated with the insulating layer 24 is a front side or a back side of the positive sheet 21 through the color development effect of the color developer, including but not limited to distinguishing situations such as surface density of the front and back sides of the positive sheet 21. A main component of the color developer is bismuth vanadate, and the color is yellow.

In this embodiment, the first side of the positive connection region 2152 may be covered with the insulating layer 24 including a color developer, and the second side of the positive connection region 2152 may be covered with the insulating layer 24 without a color developer, so that the front and back sides of the positive sheet 21 have different colors. In this way, the color development effect of the display agent in the insulating layer 24 may be utilized to quickly distinguish the front and back sides of the positive sheet 21. Because the positive sheet 21 sometimes needs to be distinguished between the front and back sides, including but not limited to distinguishing situations such as the surface density of the front and back sides of the positive sheet 21, it is necessary to add a color developer to the insulating layer 24 on one side to achieve the purpose of rapid distinction. In other embodiments, it may also be that the second side of the positive connection region 2152 is covered with the insulating layer 24 including a color developer, the first side of the positive connection region 2152 is covered with the insulating layer 24 without a color developer, which may also make the front and back sides of the positive sheet 21 have different colors.

Preferably, the insulating layer 24 covers the entire region of the first side of the positive connection region 2152 and covers the entire region of the second side of the positive connection region 2152. In the first direction Q1, a maximum width of the insulating layer 24 is greater than or equal to a positive connection region width c3. In this way, deformation of the positive connection region 2152 may be better prevented, and the insulation performance of this region may be improved. It should be noted that if the insulating layer 24 partially covers the positive tab 2151, in this case, the width of the insulating layer 24 is the maximum width.

Referring to FIG. 12 again, further, in the first direction Q1, the positive tab 2151 includes a positive tab transition portion 21511 and a positive tab body 21512. The positive tab transition portion 21511 is connected between the positive connection region 2152 and the positive tab body 21512 and is a bent region of the positive tab 2151.

Referring to FIG. 14 again, in the second direction Q2, the negative tab 2351 includes a negative tab transition portion 23511 and a negative tab body 23512. The negative tab transition portion 23511 is connected between the negative connection region 2352 and the negative tab body 23512 and is a bent region of the negative tab 2351.

A positive tab transition portion width c1 of the positive tab 2151 located at an outermost turn is greater than a positive tab transition portion width d1 of the negative tab 2351 located at an outermost turn. In this way, since hardness of the positive tab 2151 is greater than hardness of the negative tab 2351, the pressing during mounting causes the outward expansion of the positive tab 2151 in the wound structure radial direction R to be greater than the outward expansion of the negative tab 2351 in the radial direction R of the electrode assembly. By setting of the positive tab transition portion width c1 of the positive tab 2151 located at the outermost turn to be greater than the positive tab transition portion width d1 of the negative tab 2351 located at the outermost turn, the positive tab 2151 may have more bent regions compared to the negative tab 2351. As such, the pressing is prevented from affecting a size of the positive tab body 21512 formed after bending, so that sizes of the positive tab body 21512 and the negative tab body 23512 formed after bending are comparable.

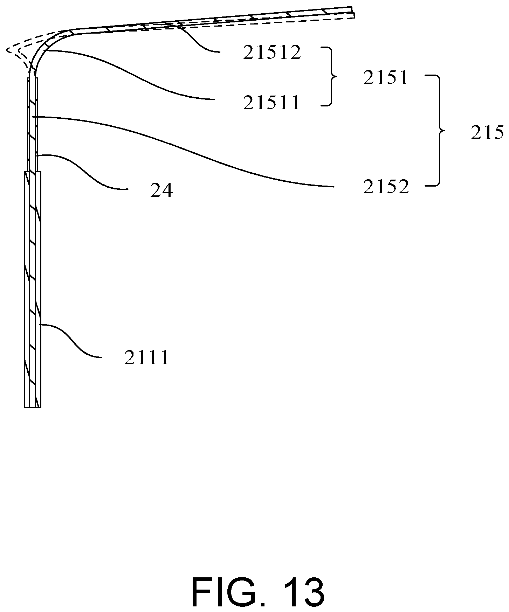

Referring to FIG. 12 again, preferably, in the first direction Q1, the positive tab transition portion width c1 is 1mm to 2mm, for example, it may be 1mm, 1.2mm, 1.5mm, 1.7mm, 1.9mm, or 2mm, etc. In this way, by setting the value range of the positive tab transition portion width c1, the positive tab 2151 may have more bent regions compared to the negative tab 2351, and that a size of the positive tab body 21512 formed after bending is prevented from being affected. It should be noted that the positive tab transition portion 21511 is arc-shaped and includes a first positive tab transition end point A1 and a second positive tab transition end point A2. The first positive tab transition end point A1 is a position where a tangent of the positive tab transition portion 21511 intersects with an extension direction of the positive connection region 2152. The second positive tab transition end point A1 is a position where the tangent of the positive tab transition portion 21511 intersects with an extension direction of the positive tab body 2152. After being pressed, the positive tab transition portion 21511 deforms and expands outward along the wound structure, and the formed structure is shown in FIG. 13.

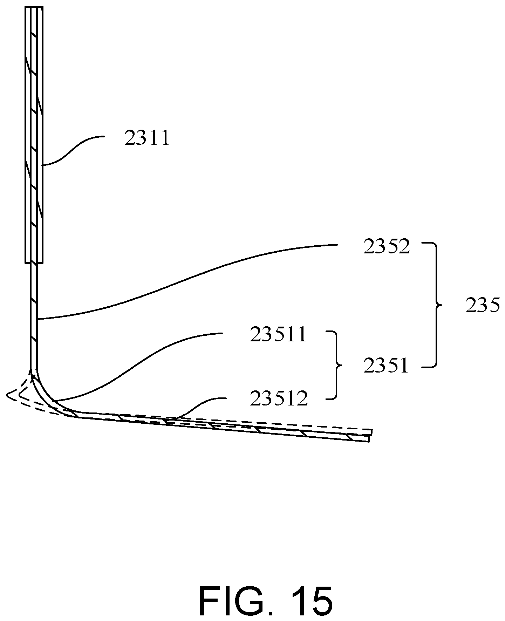

Referring to FIG. 14 again, preferably, in the second direction Q2, the negative tab transition portion width d1 is 0.1mm to 1mm, for example, it may be 0.1mm, 0.2mm, 0.5mm, 0.7mm, 0.9mm, or 1mm, etc. In this way, by setting the value range of the negative tab transition portion width d1, the negative tab 2351 may have fewer bent regions compared to the positive tab 2151, so tab material costs are saved. It should be noted that the negative tab transition portion 23511 is arc-shaped and includes a first negative tab transition end point B1 and a second negative tab transition end point B2. The first negative tab transition end point B1 is a position where a tangent of the negative tab transition portion 23511 intersects with an extension direction of the negative connection region 2352. The second negative tab transition end point B1 is a position where the tangent of the negative tab transition portion 23511 intersects with an extension direction of the negative tab body 2352. After being pressed, the negative tab transition portion 23511 deforms and expands outward along the wound structure, and the formed structure is shown in FIG. 15.

Preferably, in the first direction Q1, the positive tab body width c2 is 4.5mm to 5.5mm, for example, it may be 4.5mm, 4.7mm, 5mm, 5.1mm, 5.3mm, or 5.5mm, etc. In the second direction Q2, a negative tab body width d2 is 4mm to 5mm, for example, it may be 4mm, 4.2mm, 4.5mm, 4.7mm, 4.9mm, or 5mm, etc. In this way, by setting the value ranges of the positive tab body width c2 and the negative tab body width d2, a reasonable positive tab stacking region and a reasonable negative tab stacking region may be formed, and excessive tab layers are avoided in the stacking region, which would lower the energy density of the battery. Excessively few tab layers in the stacking regions cannot provide sufficient reserved space, and that surrounding components (e.g., separator 22, etc.) during the welding process may be burned, that is, thermal effects are formed on surrounding components, and the surrounding components are thus damaged.

Preferably, in the first direction Q1, a positive connection region width c3 is 1.5mm to 2.5mm, for example, it may be 1.5mm, 1.7mm, 2mm, 2.1mm, 2.3mm, or 2.5mm, etc. In this way, by setting the value range of the positive connection region width c3, a distance from a welding surface of a positive current-collecting plate and the positive tab 2151 to the positive coated region 212 covered with the positive active material layer 2111 may be ensured, thermal effects are avoided during welding, and safety performance is thus improved.

In the second direction Q2, a negative connection region width d3 is 1mm to 2mm, for example, it may be 1mm, 1.2mm, 1.5mm, 1.7mm, 1.9mm, or 2mm, etc. In this way, by setting the value range of the negative connection region width d3, the distance from a welding surface of a negative current-collecting plate and the negative tab 2351 to the negative coated region 232 covered with the negative active material layer 2311 may be ensured, thermal effects are avoided during welding, and safety performance is thus improved.

A positive tab thickness t1 is 12µm to 20µm, for example, it may be 12µm, 14µm, 16µm, 17.5µm, 19.5µm, or 20µm, etc. A negative tab thickness t2 is 4µm to 11µm, for example, it may be 4µm, 6µm, 7.5µm, 8µm, 9µm, or 11µm, etc. Since a material of the positive tab 2151 is usually aluminum, and a material of the negative tab 2351 is usually copper, the hardness of the positive tab 2151 is greater than the hardness of the negative tab 2351. By setting the value range of the positive tab thickness t1, the thickness is prevented from being excessively thin and easily torn during press-fitting and being excessively thick and increasing manufacturing costs. By setting the value range of the negative tab thickness t2, the use of materials may be minimized to the greatest extent on the basis of ensuring the mounting needs of the negative tab 2351, and the beneficial technical effect of cost saving is thus achieved.

Referring to FIG. 1 and FIG. 2 again, in this embodiment, the casing 10 includes a surrounding side wall 11. One end of the side wall 11 is formed with an opening 12, and one end of the casing 10 close to the opening 12 includes a crimping portion 30 recessed toward an inner portion of the casing 10. The secondary battery 1 further includes a cover plate 40, an insulating sealing member 50, and a current-collecting plate. The cover plate 40 is mounted at the opening 12. The insulating sealing member 50 is arranged around a periphery of the cover plate 40 to insulate and seal the cover plate 40 and the casing 10. The current-collecting plate is arranged between the electrode assembly 20 and the cover plate 40 and is electrically connected to the casing 10. A connection piece of the current-collecting plate is located on a side of the crimping portion 30 facing the electrode assembly 20 and is welded and connected to the crimping portion 30. In this way, by arranging the connection piece of the current-collecting plate to be located on the side of the crimping portion 30 facing the electrode assembly 20 and welded and connected to the crimping portion 30, that is, a welding region of the current-collecting plate with the tab is located at a position closer to the electrode assembly 20 compared to the crimping portion 30, the crimping portion 30 is prevented from affecting the welding region of the tab and the current-collecting plate, and the welding strength of the tab and the current-collecting plate is thus improved.

Further, the casing 10 further includes an end wall 13. The side wall 11 is arranged surrounding the end wall 13 and is located at one end of the side wall 11 away from the opening 12. The end wall 13 and the side wall 11 are arranged to form an accommodating chamber within the casing 10 for accommodating the electrode assembly 20, electrolyte, and other necessary battery components. The connection between the end wall 13 and the side wall 11 may be implemented in various ways, for example, it may be in the form of integral stamping, integral casting, or separate welding.

The secondary battery 1 further includes an electrode post 70 passing through the end wall 13 and insulated from the end wall 13.

The current-collecting plate includes a first current-collecting plate 61 and a second current-collecting plate 62. The first current-collecting plate 61 is arranged between the electrode assembly 20 and the end wall 13, and the second current-collecting plate 62 is arranged between the electrode assembly and the cover plate 40. In this embodiment, the first current-collecting plate 61 corresponds to the positive tab 2151, and the positive tab 2151 is electrically connected to the electrode post 70 through the first current-collecting plate 61. The second current-collecting plate 62 corresponds to the negative tab 2351, and the negative tab 2351 is electrically connected to the casing 10 through the second current-collecting plate 62. However, it is not limited thereto, and in other embodiments, it may also be that the first current-collecting plate 61 corresponds to the negative tab 2351, and the second current-collecting plate 62 corresponds to the positive tab 2151.

In this embodiment, the secondary battery 1 is a cylindrical battery. The cylindrical battery has advantages such as high energy density, long cycle life, and good safety performance. However, it is not limited thereto, and in other embodiments, the secondary battery 1 may be a battery of other shapes such as a prismatic battery. In this embodiment, the positive tab 2151 is a cut and stacked tab. When welding the tab and current-collecting plate of a cylindrical battery, the pre-processing steps of the tab include two different processing methods: one is a flattening tab processing method, and the other is the cut and stacked tab processing method adopted by the positive tab 2151 in this embodiment. Similarly, the negative tab 2351 is also a cut and stacked tab.

The welding sequence of the first current-collecting plate 61 and the second current-collecting plate 62 with the electrode assembly 20 of the secondary battery 1 in this embodiment is as follows. First, the first current-collecting plate 61 is placed, and the electrode assembly 20 is then pressed together on both the positive and negative sides (the pressing process may increase the contact between the current-collecting plate and the electrode assembly 20 to avoid poor welding). The first current-collecting plate 61 is welded using linear welding instead of spot welding. This is because the negative tab 2351 is relatively soft, and after being pressed twice, the second current-collecting plate 62 and the electrode assembly 20 are closer to each other. Using spot welding causes concentrated heat, leading to burning of the separator 22. Using linear welding with less heat may avoid burning the separator 22, which may cause contact short circuit between the positive and negative electrodes. Next, the second current-collecting plate 62 is placed. The electrode assembly 20 is pressed together on both the positive and negative sides again. Finally, the second current-collecting plate 62 is welded.

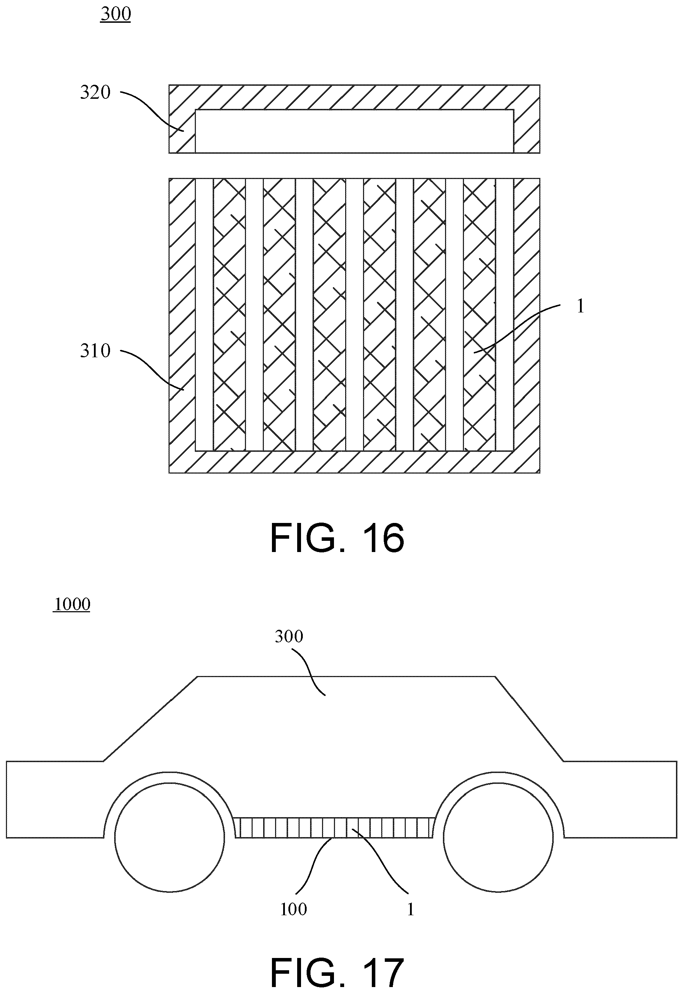

As shown in FIG. 16, the disclosure further provides a battery group 100 including the abovementioned secondary battery 1. In the battery group 100 provided by an embodiment of the disclosure, the battery group 100 includes a box 310, a box cover 320, and a plurality of secondary batteries 1. The plurality of secondary batteries 1 are placed in the box 310 and are connected in series, in parallel, or in a mixed manner of series and parallel. The box cover 320 covers the box 310 to protect the secondary batteries 1. It should be noted that in addition to the secondary battery 1 provided by the disclosure, the battery group 100 may also include a thermal management system of the battery group 100, a circuit board, and other parts. The battery group 100 may be a battery module, a battery pack, an energy storage cabinet, etc., and description thereof is not provided herein.

As shown in FIG. 17, the disclosure further provides an electronic apparatus 1000 including the aforementioned battery group 100. A working portion 300 is electrically connected to the battery group 100 to obtain power support. As an embodiment, the electronic apparatus 1000 is a vehicle. The vehicle may be a fuel vehicle, a gas vehicle, or a new energy vehicle, and the new energy vehicle may be a pure electric vehicle, a hybrid vehicle, or a range-extended vehicle, etc., which is not limited herein. The working portion 300 is a vehicle body, and the battery group 100 is arranged at the bottom of the vehicle body and provides electrical energy support for the driving of the vehicle or the operation of electrical components in the vehicle. However, in other embodiments, the electronic apparatus 1000 may be a mobile phone, a portable apparatus, a notebook computer, a ship, a spacecraft, an electric toy, an electric tool, etc. The spacecraft includes but not limited to an airplane, a rocket, a space shuttle, a spaceship, etc. The working portion 300 may be a unit component capable of obtaining the electric energy of the battery group 100 and performing corresponding work, such as a blade rotating unit of a fan, a dust collection working unit of a vacuum cleaner, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic apparatus 1000 is not particularly limited in the embodiments of the disclosure.

## Claims

1. A secondary battery (1), **characterized in that** the secondary battery (1) comprising:
a casing (10); and
an electrode assembly (20) accommodated in the casing (10) and comprising a wound structure (201) formed by stacking and winding a positive sheet (21), a separator (22), and a negative sheet (23), wherein the positive sheet (21) comprises a positive current collector (211), the negative sheet (23) comprises a negative current collector (231), in a wound structure axial direction (O), the positive current collector (211) comprises a positive coated region (212) covered by a positive active material layer (2111) and a positive uncoated region (213) not covered by the positive active material layer (2111), the negative current collector (231) comprises a negative coated region (232) covered by a negative active material layer (2311) and a negative uncoated region (233) not covered by the negative active material layer (2311), a direction from the positive coated region (212) to the positive uncoated region (213) is a first direction (Q1), and a direction from the negative coated region (232) to the negative uncoated region (233) is a second direction (Q2),
in a wound structure winding direction (P), the positive uncoated region (213) sequentially comprises a first positive uncoated region (214), a second positive uncoated region (215), and a third positive uncoated region (216), and the negative uncoated region (233) sequentially comprises a first negative uncoated region (234), a second negative uncoated region (235), and a third negative uncoated region (236),
in the first direction (Q1), the second positive uncoated region (215) comprises a positive tab (2151) and a positive connection region (2152) connected between the positive tab (2151) and the positive coated region (212), and neither the first positive uncoated region (214) nor the third positive uncoated region (216) comprises the positive tab (2151),
in the second direction (Q2), the second negative uncoated region (235) comprises a negative tab (2351) and a negative connection region (2352) connected between the negative tab (2351) and the negative coated region (232), and neither the first negative uncoated region (234) nor the third negative uncoated region (236) comprises the negative tab (2351), and
the number of winding turns of the third positive uncoated region (216) is greater than the number of winding turns of the third negative uncoated region (236).

2. The secondary battery (1) according to claim 1, wherein
a value range of the number of winding turns of the third positive uncoated region (216) is 3 to 6, or
a value range of the number of winding turns of the third negative uncoated region (236) is 1 to 3.

3. The secondary battery (1) according to claim 1, wherein in the wound structure axial direction (O), among winding turns of the second positive uncoated region (215), the second positive uncoated region (215) located at the outermost turn comprises a first bent portion, and an orthogonal projection of the first bent portion is located within an outer periphery of the wound structure (201), or
in the wound structure axial direction (O), among winding turns of the second negative uncoated region (235), the second negative uncoated region (235) located at the outermost turn comprises a second bent portion, and an orthogonal projection of the second bent portion is located within the outer periphery of the wound structure (201).

4. The secondary battery (1) according to claim 1, wherein in the wound structure winding direction (P), a first positive uncoated region length (a1) is 400 mm to 600mm, a second positive uncoated region length (a2) is 3000 mm to 5000mm, and a third positive uncoated region length (a3) is 200 mm to 500mm,
in the wound structure winding direction (P), a first negative uncoated region length (b1) is 300 mm to 500mm, a second negative uncoated region length (b2) is 3000 mm to 5000mm, and a third negative uncoated region length (b3) is 100 mm to 300mm, or
a ratio of the third positive uncoated region length (a3) to the third negative uncoated region length (b3) is 1.5 to 2.5.

5. The secondary battery (1) according to claim 1, wherein the positive connection region (2152) comprises a first side away from a center hole (2011) of the wound structure (201) and a second side close to the center hole (2011) in a wound structure radial direction (R), wherein at least a partial region of the first side and/or the second side is covered with an insulating layer (24), and the insulating layer (24) comprises a color developer.

6. The secondary battery (1) according to claim 5, wherein
the insulating layer (24) covers an entire region of the first side of the positive connection region (2152),
the insulating layer (24) covers an entire region of the second side of the positive connection region (2152), and/or
in the first direction (Q1), a maximum width of the insulating layer (24) is greater than or equal to a positive connection region width (c3).

7. The secondary battery (1) according to claim 1, wherein
in the first direction (Q1), a positive connection region width (c3) is 1.5mm to 2.5mm, and/or
in the second direction (Q2), a negative connection region width (d3) is 1mm to 2mm.

8. The secondary battery (1) according to claim 1, wherein
in the first direction (Q1), the positive tab (2151) comprises a positive tab transition portion (21511) and a positive tab body (21512), and the positive tab transition portion (21511) is connected between the positive connection region (2152) and the positive tab body (21512) and is a bent region of the positive tab (2151),
in the second direction (Q2), the negative tab (2351) comprises a negative tab transition portion (23511) and a negative tab body (23512), and the negative tab transition portion (23511) is connected between the negative connection region (2352) and the negative tab body (23512) and is a bent region of the negative tab (2351), and
a positive tab transition portion width (c1) of the positive tab (2151) located at an outermost turn is greater than a negative tab transition portion width (d1) of the negative tab (2351) located at an outermost turn.

9. The secondary battery (1) according to claim 8, wherein
in the first direction (Q1), the positive tab transition portion width (c1) is 1mm to 2mm, a positive tab body width (c2) is 4.5mm to 5.5mm, and a positive tab thickness (t1) is 12µm to 20µm, and/or
in the second direction (Q2), the negative tab transition portion width (d1) is 0.1mm to 1mm, a negative tab body width (d2) is 4mm to 5mm, and a negative tab thickness (t2) is 4µm to 11µm.

10. The secondary battery (1) according to any one of claims 1 to 9, wherein the casing (10) comprises a surrounding side wall (11), one end of the side wall (11) is formed with an opening (12), one end of the casing (10) close to the opening (12) comprises a crimping portion (30) recessed toward an inner portion of the casing (10),
the secondary battery (1) further comprises:
a cover plate (40) mounted at the opening (12);
an insulating sealing member (50) arranged around a periphery of the cover plate (40), so that the cover plate (40) and the casing (10) are insulated and sealed; and
a current-collecting plate arranged between the electrode assembly (20) and the cover plate (40) and electrically connected to the casing (10), a connection piece of the current-collecting plate is located on a side of the crimping portion (30) facing the electrode assembly (20) and is welded and connected to the crimping portion (30),
and/or
the secondary battery (1) is a cylindrical battery, wherein the positive tab (2151) is a cut and stacked tab, and the negative tab (2351) is a cut and stacked tab.

11. A battery group (100), **characterized in that** the battery group (100) comprising the secondary battery (1) according to any one of claims 1 to 10.

12. An electronic apparatus (1000), **characterized in that** the electronic apparatus (1000) comprising the battery group (100) according to claim 11.
